# EUROPEAN PATENT APPLICATION

(11) **EP 3 156 953 A1**
(43) Date of publication of application: **19.04.2017**
(21) Application number: 16194095.2
(22) Date of filing: 17.10.2016
(51) Int. Cl.: G06Q 10/06, G06Q 10/10

(54) **SUPPORTIVE INTELLIGENCE FOR BUSINESS SOFTWARE**

(30) Priority: 17.10.2015 US 201514886009
(71) Applicant: Achiever Technology Limited, Kowloon (HK)
(72) Inventor: CHOW, Warren Chiu Chun, Kowloon (HK)
(74) Representative: Modiano, Gabriella Diana

(57) **Abstract**

A method and system for detecting and learning human errors in the operation of business software applications and responding by alerting the users should there be a possible data fault. By intercepting the user's data input to the business software application, extracting from the data input an input value and checking any value discrepancy against a pre-defined default value and a zero-tolerable range of default value, human errors are detected, or the system is adjusted to accommodate the input value. Therefore, through the use over a period of time and by a plurality of users, the system learns and adapts to the changing data input that reflect the changing business needs of the users of the business software application.

## Description

### Field of the Invention:

The present invention relates generally to computer systems running business software applications. More particularly, the present invention relates to methods and systems providing intelligence support to computer systems running business software applications.

### Background:

Business software applications are mostly designed to facilitate information exchange and communication management. For example, enterprise resource planning (ERP) software is used to manage a host of business functions such as product planning, inventory management, shipping and payment, etc.; customer relationship management (CRM) software is used to manage customer contacts, coordinate sales and marketing activities, etc. The effectiveness of a business software application is largely dependent on the accuracy and sufficiency of the data input into the business software application. Thus, the value of the business software application to a company rests on both whether the users input the information and did so accurately. A failure of either could result in data fault, causing misbehavior of business software application. This is often a major problem for most companies, and more typical for large enterprises with large user bases. There is an unmet need for a mechanism that can detect and learn human errors and respond by alerting the users should there be a possible data fault.

### Summary:

It is an objective of the present invention to provide a method and system for detecting and learning human errors in the operation of business software applications and responding by alerting the users should there be a possible data fault.

It is a further objective of the present invention to provide a supportive intelligence layer of computer system modules for detecting and learning human errors in the operation of a business software application and providing responses. The supportive intelligence layer operates as one or more computer system modules implemented as a standalone software application or software application extension to compliment and/or incorporate into the business software application.

In accordance to one embodiment of the present invention, supportive intelligence layer provides a learning, detection, and correction process in which an Element is first defined to associate with a data or a group of related data input to the business software application. The definition of the Element is created, recognized, and retained by the supportive intelligence layer such that it can understand the nature of the Element. Each Element has one or more Item and each Item can have one or more major and/or minor Attributes. Each Attribute is optionally pre-defined and continuously defined during operation a default value, a list of acceptable values, and a tolerable range of default value.

In the learning, detection, and correction process, the supportive intelligence layer intercepts and learns each time an user enters data input to the business software application, wherein the data input is associated with an Element defined previously, and each input value of the data input is viewed as a value for an Attribute of an Item of the associated Element. Each Attribute begins with at least a zero-tolerance range. The learning of users' entries of data input in the course of the operation of the business software application allows the supportive intelligence layer to continuously adjust the default value, the list of acceptable values, and the tolerable range of default value of an Attribute.

Upon the interception of user's entries of data input, the supportive intelligence layer processes the intercepted data input and extracts the input value for each Attribute of each Element Item. Should the input value not among the Attribute's list of acceptable values and falls outside of the Attribute's tolerable range of the default value, the supportive intelligence layer alerts the user of the value discrepancy and provides four options:
1. Change the input value to that of the Attribute's current default value;
2. Accept the input value and widens the Attribute's current tolerable range of default value;
3. Accept the input value and adds the input value to the Attribute's list of acceptable values; and
4. Accept the input value and change the Attribute's current default value to that of the input value.
   If the user opts for the second option, the supportive intelligence layer widens the Attribute's current tolerable range to include that of the input value. If the user opts for the third option, the supportive intelligence layer adds the input value to the Attribute's list of acceptable values. If the user opts for the forth option, the supportive intelligence layer replaces the Attribute's current default value with that of the input value.

In accordance to one embodiment of the present invention, the supportive intelligence layer can also assist the user by providing either suggestive input value (default value) for an Attribute or directly entering an input value (default value) for an Attribute.

### Brief Description of the Drawings:

Embodiments of the invention are described in more detail hereinafter with reference to the drawings, in which
FIG. 1 shows a block diagram illustrating an exemplary embodiment of the presently claimed supportive intelligence layer in logical relation to a business software application; and
FIG. 2 shows a flow diagram of a learning process in accordance to an embodiment of the presently claimed supportive intelligence layer.

### Detailed Description:

In the following description, methods and systems of detecting and learning human errors in the operation of business software applications and responding by alerting the users should there be a possible data fault and the like are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.

### System:

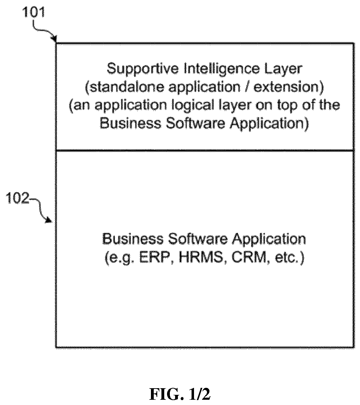

In accordance to an embodiment of the present invention, a supportive intelligence layer of computer system modules for detecting and learning human errors in the operation of a business software application and providing responses is provided. The supportive intelligence layer operates as one or more computer system modules implemented as a standalone software application or software application extension to compliment and/or incorporate into the business software application. Alternatively, the supportive intelligence layer operates as one or more computer system modules implemented as one or more specially configured computing processors. Referring to FIG. 1. Logically, the supportive intelligence layer **101** can be represented by an application layer residing on top of the business software application **102**, intercepting the data input to the business software application **102**. An ordinarily skilled person in the art can appreciate that the supportive intelligence layer can be adapted to various hardware/software architectures including, but not limited to, centralized computing where all modules are executed in one or more central processing servers, and distributed computing where some modules are executed in one or more user's client computing devices and some other modules are executed in one or more processing servers. An ordinarily skilled person in the art can appreciate that the supportive intelligence layer can be implemented using high level computer instruction language including, but not limited to, Javascript, VBScript, .NET, Java, C, C++, Objective-C, Ruby, Python, and Swift.

### Learning, Detection, and Correction Process:

In accordance to one embodiment of the present invention, the supportive intelligence layer provides a learning, detection, and correction process in which an Element is first defined to associate with a data or a group of related data input to the business software application. The definition of the Element is created, recognized, and retained by the supportive intelligence layer such that it can understand the nature of the Element. Each Element has one or more Item and each Item can have one or more major and/or minor Attributes. Each Attribute is optionally pre-defined and continuously defined during operation a default value, a list of acceptable values, and a tolerable range of default value. Therefore, Elements, Element Items, and Attributes represent logically a structure or arrangement of multiple data points and their relationships.

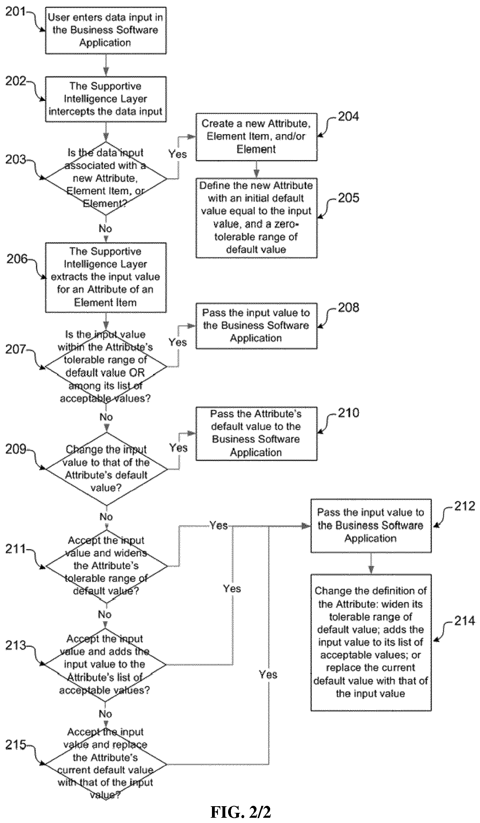

Referring to FIG. 2. Each time a user enters a data input in the business software application, the learning, detection, and correction process is executed, which comprises the following steps:
1. (**201**) An user enters data input in the business software application;
2. (**202**) The supportive intelligence layer intercepts the data input;
3. (**203**) The supportive intelligence layer determines whether the data input is associated with an existing Attribute;
4. (**204 - 205**) If the data input is not associated with an existing Attribute, then a new Attribute, Element Item, or Element is created for the data input; the new Attribute is defined with an initial default value equal to the input value of the data input and a zero-tolerable range of default value; and the learning, detection, and correction process terminates.
5. (**206**) Else if the data input is associated with an existing Attribute, then the supportive intelligence layer extracts from the data input an input value for the associated Attribute of the associated Element Item.
6. (**207**) The supportive intelligence layer checks whether the input value is within the associated Attribute's tolerable range of default value, or among its list of acceptable values.
7. (**208**) If the input value is within the associated Attribute's tolerable range of default value or among its list of acceptable values, then the data input is passed to the business software application;
   else if the input value is outside the associated Attribute's tolerable range of default value and not among its list of acceptable values, then the supportive intelligence layer alerts the user of the value discrepancy and provides four options:
   - (**209**) changes the input value to that of the Attribute's current default value and (**210**) passes to the business software application;
   - (**211**) accepts the input value and widens the Attribute's current tolerable range of default value, (**212**) passes to the business software application, and (**214**) widens the Attribute's current tolerable range to include the input value;
   - (**213**) accepts the input value and adds the input value to the Attribute's list of acceptable values, (**212**) passes to the business software application, and (**214**) adds the input value to the Attribute's list of acceptable values; and
   - (**215**) accepts the input value and replaces the Attribute's current default value with that of the input value, (**212**) passes to the business software application, and (**214**) replaces the Attribute's current default value with that of the input value.

Therefore, through the use over a period of time and by a plurality of users, the supportive intelligence layer aggregately learns and adapts to the changing data input that reflect the changing business needs of the users of the business software application.

In accordance to one embodiment of the present invention, the supportive intelligence layer can also assist the user by providing either suggestive input value for an Attribute or directly entering an input value for an Attribute based on the default value for the Attribute.

The embodiments disclosed herein may be implemented using general purpose or specialized computing devices, computer processors, or electronic circuitries including but not limited to digital signal processors (DSP), application specific integrated circuits (ASIC), field programmable gate arrays (FPGA), and other programmable logic devices configured or programmed according to the teachings of the present disclosure. Computer instructions or software codes running in the general purpose or specialized computing devices, computer processors, or programmable logic devices can readily be prepared by practitioners skilled in the software or electronic art based on the teachings of the present disclosure.

In some embodiments, the present invention includes computer storage media having computer instructions or software codes stored therein which can be used to program computers or microprocessors to perform any of the processes of the present invention. The storage media can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A system for detecting, learning, and correcting human errors in operation of a business software application, comprising:
a supportive intelligence layer comprising one or more computer system modules, wherein the supportive intelligence layer being configured to:
intercept user's data input to the business software application;
extract from the data input an input value;
determine whether the data input is associated with an existing Attribute;
if the data input is not associated with an existing Attribute, then create a new Attribute, Element Item, or Element for the data input, wherein the new Attribute is defined with an initial default value equal to the input value of the data input and a zero-tolerable range of default value;
else if the data input is associated with an existing Attribute, then determine whether the input value is within the associated Attribute's tolerable range of default value or among its list of acceptable values;
if the input value is within the associated Attribute's tolerable range of default value or among its list of acceptable values, then pass the data input to the business software application;
else if the input value is outside the associated Attribute's tolerable range of default value and not among its list of acceptable values, then alert the user of a value discrepancy and provide four options:
(i) changes the input value to that of the associated Attribute's current default value;
(ii) accepts the input value and widens the associated Attribute's current tolerable range of default value;
(iii) accepts the input value and adds the input value to the associated Attribute's list of acceptable values; and
(iv) accepts the input value and replaces the associated Attribute's current default value with that of the input value.

2. The system of claim 1, wherein supportive intelligence layer being further configured to provide a suggestive input value for the data input based on the associated Attribute's default value.

3. The system of claim 1, wherein supportive intelligence layer being further configured to directly set an input value for the data input based on the associated Attribute's default value.

4. The system of claim 1, wherein supportive intelligence layer being implemented as one or more specially configured computing processors.

5. The system of claim 1, wherein supportive intelligence layer being implemented as extension to the business software application.

6. A computer-implemented method for detecting, learning, and correcting human errors in operation of a business software application, comprising:
intercepting user's data input to the business software application;
extracting from the data input an input value;
determining whether the data input is associated with an existing Attribute;
if the data input is not associated with an existing Attribute, then creating a new Attribute, Element Item, or Element for the data input, wherein the new Attribute is defined with an initial default value equal to the input value of the data input and a zero-tolerable range of default value;
else if the data input is associated with an existing Attribute, then determining whether the input value is within the associated Attribute's tolerable range of default value or among its list of acceptable values;
if the input value is within the associated Attribute's tolerable range of default value or among its list of acceptable values, then passing the data input to the business software application;
else if the input value is outside the associated Attribute's tolerable range of default value and not among its list of acceptable values, then alerting the user of a value discrepancy and providing four options:
(i) changing the input value to that of the associated Attribute's current default value;
(ii) accepting the input value and widening the associated Attribute's current tolerable range of default value;
(iii) accepting the input value and adding the input value to the associated Attribute's list of acceptable values; and
(iv) accepting the input value and replacing the associated Attribute's current default value with that of the input value.

7. The method of claim 6, further comprising providing a suggestive input value for the data input based on the associated Attribute's default value.

8. The method of claim 6, further comprising directly setting an input value for the data input based on the associated Attribute's default value.
